Europäisches Patentamt

European Patent Office

Office européen des brevets

(11) Veröffentlichungsnummer: **0 387 710**
**A2**

## (12) EUROPÄISCHE PATENTANMELDUNG

(21) Anmeldenummer: **90104495.8**

(22) Anmeldetag: **09.03.90**

(51) Int. Cl.⁵: **G05G 5/02, G01P 13/04**

(30) Priorität: **17.03.89 DE 3908751**

(43) Veröffentlichungstag der Anmeldung:
**19.09.90 Patentblatt 90/38**

(84) Benannte Vertragsstaaten:
**DE FR GB**

(71) Anmelder: **Standard Elektrik Lorenz**
**Aktiengesellschaft**
**Lorenzstrasse 10**
**D-7000 Stuttgart 40(DE)**

(72) Erfinder: **Popp, Hartmut**
**Riemenschneiderstrasse 12**
**D-8500 Nürnberg 10(DE)**

(74) Vertreter: **Hösch, Günther, Dipl.-Ing. et al**
**Standard Elektrik Lorenz AG Patent- und**
**Lizenzwesen Postfach 30 09 29**
**D-7000 Stuttgart 30(DE)**

(54) Impulsgenerator.

(57) Bei einem Impulsgenerator mit einem als Zahnrad ausgebildeten Rastrad aus weichmagnetischem Material und magnetischer Rast infolge der Einwirkung von zwei im Abstand der Zahnteilung voneinander entfernten entgegengesetzt magnetisch gepolten Polschuhen auf die Zahnstirn der Zähne des Rastrades muß zur Erzeugung einer ausreichenden Rastwirkung das Rastrad relativ dick sein, um eine genügend große Polfläche der Zahnstirn zu erhalten. Erfindungsgemäß werden die Polschuhe (7, 8) in einer zur Ebene (5) des Rastrades (1) parallelen Ebene (6) dicht über den Zähnen (4) angebracht. Dadurch kann das Rastrad relativ dünn ausgebildet werden und kann z.B. durch Ausstanzen hergestellt werden.

FIG.1

EP 0 387 710 A2

Die vorliegende Erfindung bezieht sich auf einen Impulsgenerator gemäß dem Oberbegriff des Anspruchs 1.

Ein derartiger Impulsgenerator ist aus dem Prospekt "Bit-Generator BG 40" der ITT Components, 1983, bekannt. Bei dem dort gezeigten Gegenstand sind zwei im Abstand der Zahnteilung vorgesehene Polschuhe derart angeordnet, daß ihre Polfläche gegen den Umfang des Rastrades gerichtet sind. Um eine gute Rastwirkung zu erzielen, muß das Rastrad ausreichend dick sein, um eine genügend große Polfläche durch die Zahnstirnfläche am Umfang zu bilden. Eine dicke gezahnte Scheibe ist aber relativ teuer in der Herstellung, da die Zähne gefräst werden müssen.

Mit der Erfindung soll die Aufgabe gelöst werden, ein Rastrad dünn ausbilden zu können und es soll trotzdem je Zahn eine große Polfläche besitzen.

Gelöst wird diese Aufgabe durch die im Kennzeichen des Anspruchs 1 angegebenen Merkmale. Hierdurch geht die Zahnlänge in die Größe der Polfläche ein. Die Zahndicke kann daher sehr klein ausgeführt werden. Ein derart dünnes Rastrad kann leicht durch Ausstanzen hergestellt werden und es besitzt eine geringe Masse.

Weitere vorteilhafte Einzelheiten der Erfindung sind in den Unteransprüchen enthalten und nachfolgend anhand eines in der Zeichnung veranschaulichten Ausführungsbeispiels beschrieben. Es zeigen:

Fig. 1 eine Draufsicht auf einen Sektor des Rastrades und der Polschuhe mit dem Permanentmagneten und

Fig. 2 die Abwicklung entsprechend dem Schnitt A-B der Fig. 1.

Mit 1 ist ein um eine Achse 2 drehbares Rastrad aus weichmagnetischem Material bezeichnet. Es besitzt am Umfang eine durch vorzugsweise ausgestanzte Zahnlücken 3 gebildete Zahnung mit radial abstehenden Zähnen 4 mit konstanter Zahnteilung z. Die Zähne 4 besitzen in der Draufsicht längliche Rechteckform mit einem Längen-zu-Breitenverhältnis von etwa 2:1 bis 6:1, vorzugsweise 3:1 bis 5:1.

Eng angrenzend an die Zähne 4, in der Zeichnung dicht oberhalb der Zähne 4, sind in einer zur Ebene 5 des Rastrades 1 parallelen Ebene 6 zwei Polschuhe 7 und 8 im gegenseitigen Abstand einer Zahnteilung z angeordnet. Diese besitzen zweckmäßig radial abstehende Laschen 9 bzw. 10, die durch einen Permanentmagneten 11 verbunden und durch diesen gegenpolig zueinander magnetisch polarisiert sind. Der Permanentmagnet 11 kann dadurch außerhalb des Umfangs des Rastrades 1 angebracht werden. Die Form der Polschuhe 7, 8 ist zweckmäßig so gewählt, daß sie deckungsgleich sind zu den Zähnen 4 des Rastrades 1.

Um eine gute magnetische Rastwirkung zu erzielen, ist zwischen den benachbarten, von den Polschuhen 7, 8 wenigstens zum Teil bedeckten Zähnen 4 auf der den Polschuhen 7, 8 abgewandten Seite des Polrades 1 in einer zweiten parallelen Ebene ein magnetischer Rückschluß in Form eines magnetisierbaren Streifens oder einer beim Ausführungsbeispiel verwendeten Leitscheibe 12 aus weichmagnetischem Material vorgesehen. Dieser magnetische Rückschluß, d.h. der Streifen oder die Leitscheibe 12, erstreckt sich über den Flächenbereich der Zahnlücken 3. Vorzugsweise sind die Flächen der Zahnlücken 3 zu etwa 30 bis 100%, insbesondere über 50% bedeckt.

Die Leitscheibe 12 und das Rastrad 1 sind fest ohne Axialspiel zueinander montiert und insbesondere miteinander verbunden, z.B. durch Nieten und/oder Punktschweißen.

Gemäß einer vorteilhaften Ausgestaltung der Erfindung entspricht bei einer Zähnezahl Z und einer Zahnteilung z die Weite der Zahnlücke 3 etwa dem drei- bis sechsfachen der Zahnbreite B. Die Dicke D der Polschuhe 7, 8 entspricht etwa der Zahnbreite B. Bei dieser Wahl der Abmessungen können Rasträder 1 eingesetzt werden, die eine Zähnezahl von n.Z bzw. eine Zahnteilung von $\frac{1}{n}$ .z mit n gleich einer ganzen Zahl von z.B. 2 bis 5 aufweisen.

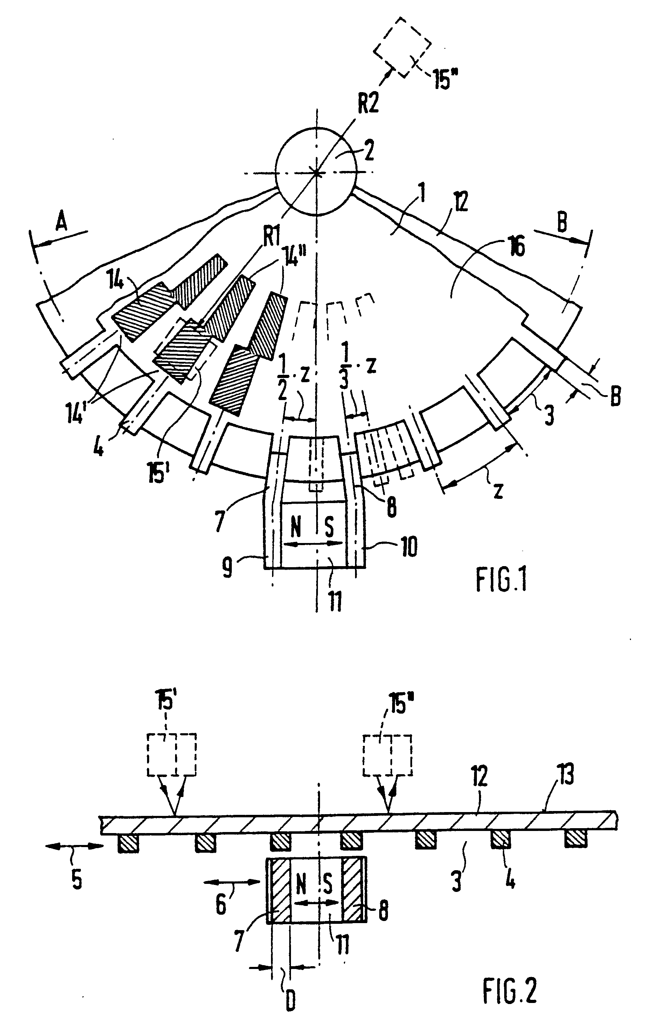

Bei gleichen Abmessungen des Magnetsystems 7, 8 und 11, dessen Polschuhe 7, 8 um eine Zahnteilung z beabstandet sind, können dann verschiedene Rastwinkel und eine sehr unterschiedliche Zahl von Raststellungen pro Umdrehung des Rastrades 1 erhalten werden. Ist z.B. Z gleich 16, so sind mit n gleich 2 bis 4 leicht 32, 48 oder 64 Rastungen je Umdrehung erreichbar. Zwei der möglichen Zahnteilungen mit $\frac{1}{2}$ .z und $\frac{1}{3}$ .z sind in Fig. 1 gestrichelt eingezeichnet.

Gemäß einer weiteren vorteilhaften Ausgestaltung der Erfindung ist die freie Seite 13 der Leitscheibe 12 und/oder die eine oder beide freie(n) Seite(n) 16 des Rastrades 1 lichtreflektierend, z.B. hochglänzend, ausgebildet und auf diesen genannten Seiten ist, wie in Fig. 1 dargestellt, ein Muster ähnlich einem Speichenrad mit z.B. der Anzahl der Zähne n.Z entsprechenden Anzahl von Speichen 14 entsprechend der Zahnteilung $\frac{1}{n}$ .Z aus nicht oder schlecht reflektierendem Material, z.B. schwarzem Mattlack, aufgebracht. Diese bedruckte(n) Seite(n) 16 und/oder 13 wird bzw. werden von einer Reflexlichtschranke abgetastet.

Zur Erkennung der Links- oder Rechtsdrehung des Rastrades 1 sind zwei zueinander koaxiale Muster 14' und 14'' vorgesehen, die z.B. um 90° gegeneinander phasenverschoben aufgebracht sind. Jedem Muster 14' und 14'' ist eine Reflexlichtschranke 15' bzw. 15'' zugeordnet. Die Reflex-Lichtschranken 15', 15'' sind auf einem Radiusvektor oder einem Durchmesser mit unterschiedlichem Radius R1 und R2 angeordneet. Durch eine entsprechende elektronische Auswerteschaltung ist die Impulszahl und die Links- oder Rechtsdrehung ermittelbar und als Steuersignale ausgebbar.

Durch einfachen Ersatz oder Austausch des bedruckten Rastrades 1 gegebenenfalls mit der Leitscheibe 12 gegen ein anderes mit unterschiedlicher Zähnezahl und unterschiedlichem Muster können mehrere Typen von Bitgeneratoren hergestellt werden.

## Ansprüche

1. Impulsgenerator mit magnetischer Rast, mit einem Rasstrad aus weichmagnetischem Material mit am Umfang vorgesehener Zahnung konstanter Zahnteilung mit langen, schmalen Zähnen, sowie mit zwei durch einen Permanentmagneten entgegengesetzt polarisierten Polschuhen aus weichmagnetischem Material, die derart angeordnet sind, daß in Raststellung jeweils ein Polschuh mit einem Zahn fluchtet und die Polschuhe in geringem Abstand zu den Zähnen des Rastrades angeordnet sind, **dadurch gekennzeichnet,** daß die Polschuhe (7, 8) in einer zur Ebene (5) des Rastrades (1) parallelen Ebene (6) angeordnet sind.

2. Impulsgenerator nach Anspruch 1, dadurch gekennzeichnet, daß auf der den Polschuhen (7, 8) abgewandten Seite der Zähne (4) in einer zweiten parallelen Ebene ein die Zähne (4) überbrückender magnetischer Rückschluß (12) vorgesehen ist.

3. Impulsgenerator nach Anspruch 2, dadurch gekennzeichnet, daß der magnetische Rückschluß aus einer an dem Rastrad (1) anliegenden Leitscheibe (12) aus weichmagnetischem Material besteht, die mindestens teilweise in den Flächenbereich der Zahnlücken (3) reicht.

4. Impulsgenerator nach Anspruch 3, dadurch gekennzeichnet, daß die Leitscheibe (12) über 50% der Fläche jeder Zahnlücke (3) bedeckt.

5. Impulsgenerator nach Anspruch 3 oder 4, dadurch gekennzeichnet, daß das Rastrad (1) und die Leitscheibe (12) ohne Axialspiel zueinander montiert sind.

6. Impulsgenerator nach Anspruch 3, 4 oder 5, dadurch gekennzeichnet, daß das Rastrad (1) und die Leitscheibe (12) fest miteinander verbunden sind.

7. Impulsgenerator nach Anspruch 6, dadurch gekennzeichnet, daß das Rastrad (1) und die Leitscheibe (12) durch Nieten miteinander verbunden sind.

8. Impulsgenerator nach Anspruch 6 oder 7, dadurch gekennzeichnet, daß das Rastrad (1) und die Leitscheibe (12) durch Punktschweißen miteinander verbunden sind.

9. Impulsgenerator nach einem der Ansprüche 1 bis 8, dadurch gekennzeichnet, daß der Permanentmagnet (11) außerhalb des Umfangs des Rastrades (1) angeordnet ist.

10. Impulsgenerator nach einem der Ansprüche 1 bis 9, dadurch gekennzeichnet, daß bei einer Zahnteilung nz mit n gleich 1 die Weite der Zahnlücke (3) etwa dem drei bis sechsfachen der Zahnbreite (B) entspricht, daß die Polschuhe (7, 8) um eine Zahnteilung (Z) voneinander beabstandet sind und die Dicke (D) eines Polschuhes (7, 8) etwa einer Zahnbreite (B) entspricht.

11. Impulsgenerator nach Anspruch 10, dadurch gekennzeichnet, daß das Rastrad (1) mit Leitscheibe (12) gegen eine solche Einheit mit einer Zahnteilung n.z mit n gleich zwei bis fünf austauschbar bzw. durch eine solche ersetzbar ist.

12. Impulsgenerator nach einem der Ansprüche 1 bis 11, dadurch gekennzeichnet, daß die freie Seite (13) der Leitscheibe (12) und/oder die freie(n) Seite(n) (16) des Rastrades (1) lichtreflektierend ausgebildet und mit zwei koaxial zueinander und um eine Phase von 90° gegeneinander versetzten Mustern (14', 14") aus radialen Speichen (14) mit nicht oder schlecht reflektierender Oberfläche versehen ist, daß die Speichen (14) entsprechend der Zahnteilung $\frac{1}{n}$.Z des Rastrades (1) angeordnet sind, und daß im Abstand von der freien Seite (13 bzw. 16) je Muster (14', 14") eine Reflexlichtschranke (15', 15") vorgesehen ist.

FIG.1

FIG.2